# EUROPÄISCHE PATENTSCHRIFT

(11) **EP 0 756 193 B1**
(45) Veröffentlichungstag und Bekanntmachung des Hinweises auf die Patenterteilung: **17.02.2016**
(21) Anmeldenummer: 96111894.0
(22) Anmeldetag: 24.07.1996
(51) Int. Cl.: G02F 1/1337

(54) **Verfahren zur Erzeugung von Kippwinkeln in photoorientierten Polymernetzwerkschichten**
Method for inducing tilt angles in photo-oriented polymer network layers
Procédé d'obtention d'angles d'inclinaison dans des couches de réseaux de polymères photo-orientés

(30) Priorität: 28.07.1995 CH 221895; 15.03.1996 CH 68896
(43) Veröffentlichungstag der Anmeldung: 29.01.1997
(73) Patentinhaber: Rolic AG, 6301 Zug (CH)
(72) Erfinder: Schadt, Martin, 4411 Seltisberg (CH); Schuster, Andreas, 79110 Freiburg (DE); Seiberle, Hubert, 79576 Weil am Rhein (DE)
(74) Vertreter: Veenstra, Eva

(56) Entgegenhaltungen:
- EP-A- 0 387 059
- EP-A2- 0 684 500
- SOCIETY FOR INFORMATION DISPLAY INTERNATIONAL SYMPOSIUM, 23.Mai 1995, ORLANDO, FLA, US, Seiten 877-880, XP002016165 HASHIMOTO ET AL: "TN-LCD with Quartered Subpixels Using Polarized UV-Light-Irradiated Polymer Orientation Films"
- JAPANESE JOURNAL OF APPLIED PHYSICS, PART 1, Bd. 31, Nr. 7, Juli 1992, TOKYO JP, Seiten 2155-2164, XP002016166 SCHADT ET AL: "Surface-Induced Parallel Alignment of Liquid Crystals by Linearly Polymerized Photopolymers"
- JAPANESE JOURNAL OF APPLIED PHYSICS, PART 1, Bd. 31, Nr. 7, Juni 1995, TOKYO JP, Seiten 3240-3249, XP002016167 SCHADT ET AL: "Photo-Generation of Linearly Polymerized Liquid Crystal Aligning Layers Comprising Novel, Integrated Optically Patterned Retarders and Color Filters"

## Beschreibung

Die Erfindung betrifft ein Verfahren zur Erzeugung eines photoorientierten, strukturanisotropen Polymernetzwerkes (PPN) mit einer beliebigen azimutalen Orientierungsrichtung und einem Kippwinkel an dessen Oberfläche, sowie mit diesem Verfahren hergestellte Orientierungsschichten zur Orientierung von monomeren und polymeren Flüssigkristallen und deren Verwendung.

Zur Orientierung von Flüssigkristallmolekülen in Flüssigkristallanzeigen (LCD) verwendet man üblicherweise uniaxial geriebene Polymer-Orientierungsschichten wie z.B. Polyimid. Durch die Reibrichtung wird dabei einerseits die Orientierungsrichtung vorgegeben, andererseits wird während des Reibprozesses ein Kippwinkel auf der Polymeroberfläche erzeugt

Bringt man einen Flüssigkristall in Kontakt mit einer solchen Oberfläche, so liegen die Flüssigkristallmoleküle nicht parallel sondern geneigt zur Oberfläche, d.h. der Kippwinkel wird auf den Flüssigkristall übertragen. Die Grösse des Kippwinkels wird dabei sowohl durch Reibparameter wie z.B. Vorschubgeschwindigkeit und Anpressdruck sowie durch die chemische Struktur des Polymers bestimmt. So gibt es eine Vielzahl von strukturell verschiedenen Polyimiden, die bei gleichen Präparations- und Reibparametern zu völlig verschiedenen Kippwinkeln führen. Für die Herstellung von Flüssigkristallanzeigen sind je nach Typ Kippwinkel zwischen 1° und 15° erforderlich. Die grösseren Kippwinkel sind insbesondere für Supertwisted Nematic (STN) LCDs unabdingbar, um das Entstehen von sog. Fingerprint-Texturen zu vermeiden. In Twisted Nematic (TN)- und Thin Film Transistor (TFT)-TN-LCDs wird durch den Kippwinkel die Dreh- und die Kipprichtung definiert, wodurch "Reverse Twist"- und "Reverse Tilt "-Phänomene verhindert werden. Während Reverse Twist im ungeschalteten Zustand Gebiete mit falschem Drehsinn zur Folge hat, was sich optisch in fleckigem Aussehen der Anzeige bemerkbar macht, macht sich Reverse Tilt vor allem beim Schalten des LCDs durch Verkippen der Flüssigkristalle in unterschiedliche Richtungen optisch sehr störend bemerkbar. Reverse Twist lässt sich zusätzlich durch Dotieren der Flüssigkristallmischung mit einem chiralen Dotierstoff geeigneter Drehrichtung verhindern. Zur Unterdrückung von Reverse Tilt gibt es jedoch keine alternative Möglichkeit zum Einsatz von Orientierungsschichten mit Kippwinkel.

Obwohl geriebene Polymerschichten zur Orientierung von Flüssigkristallen in der LCD-Produktion bestens eingeführt sind, gibt es einige gravierende Nachteile, die mit dem Reiben ursächlich zusammenhängen: So ist die Ausbeute bei der LCD Produktion infolge optisch ungenügender Displays nicht optimal. Denn mit dem Reiben einerseits ist immer auch die Erzeugung von Staub verbunden, andererseits wird durch das Reiben elektrostatische Ladung auf der Polymerschicht erzeugt, die z.B. bei TFT-TN-LCDs zur Zerstörung von darunterliegenden Dünnschichttransistoren führen kann, jedoch auch Ursache für die Anziehung von zusätzlichem Staub auf die Oberfläche ist. Ein weiterer gravierender Nachteil besteht darin, dass die Orientierungsrichtung beim grossflächigen Reiben nicht lokal variiert werden kann. Dadurch kann die Blickwinkelabhängigkeit von TN-LCDs nicht praktikabel verbessert werden.

In letzter Zeit sind nun Orientierungsschichten bekannt geworden, bei denen die Orientierungsrichtung durch Bestrahlen mit linear polarisiertem Licht vorgegeben werden kann. Dadurch können die dem Reiben inhärenten Probleme umgangen werden. Die zusätzliche Möglichkeit, die Orientierungsrichtung gebietsweise unterschiedlich vorzugeben, eröffnet dabei völlig neue Möglichkeiten, die Eigenschaften von Flüssigkristallanzeigen, etwa die Blickwinkelabhängigkeit von TN-LCDs, zu optimieren.

In der US-A- 4,974,941 ist ein Verfahren beschrieben, das auf einem Guest-host System beruht, bei dem beim Bestrahlen mit linear polarisiertem Licht geeigneter Wellenlänge durch cis-trans-Isomerisation von Farbstoffen eine Vorzugsrichtung induziert wird. Flüssigkristalle, die mit der Oberfläche einer so belichteten Schicht in Kontakt sind, werden entsprechend dieser Vorzugsrichtung orientiert. Dieser Orientierungsprozess ist, reversibel, d.h. durch nochmaliges Bestrahlen der Schicht mit Licht einer zweiten Polarisationsrichtung lässt sich die bereits eingeschriebene Richtung der Orientierung wiederum drehen. Da dieser Umorientierungsprozess beliebig oft wiederholbar ist und grosse Lichtintensitäten bedingt, sind Orientierungsschichten auf dieser Basis für den Einsatz in LCDs wenig geeignet.

Im Gegensatz zu diesem reversiblen Orientierungsverfahren, wird bei den in US-A-5,389,698 beschriebenen photostrukturierbaren Orientierungsschichten ein irreversibles anisotropes Polymernetzwerk aufgebaut. Die während der Belichtung mit linear polarisiertem Licht in diesem induzierten anisotropen orientierenden Eigenschaften sind in der Regel photostabil, lassen sich also durch weitere Belichtungen nicht mehr umorientieren. Die photoorientierten Polymernetzwerke (PPN) sind deshalb insbesondere dort einsetzbar, wo stabile, strukturierte oder unstrukturierte Flüssigkristall-Orientierungsschichten benötigt werden. Ausser in LCDs finden solche Orientierungsschichten Einsatz bei der Herstellung von weiteren optischen Elementen wie nichtabsorptive Farbfilter, lineare und cholesterische Polarisationsfilter, optische Verzögerungsschichten usw.

Insbesondere für den Einsatz in LCDs muss, wie vorstehend erwähnt, neben der Orientierungsrichtung auch ein Kippwinkel durch die Orientierungsschicht vermittelt werden. Bis jetzt gibt es allerdings keinen zufriedenstellenden Ansatz, bei photostrukturierbaren Orientierungsschichten praktikable Kippwinkel zu induzieren. Das einzige bisher bekannte Verfahren ist in Hashimoto, T. et al. in SID 95 DIGEST, 877 (1995) beschrieben. Mit diesem Verfahren werden durch Kombination von zwei aufeinanderfolgenden Belichtungen von PPN-Substraten sehr kleine Kippwinkel (£0.3°) erzeugt. Die erste Belichtung wird dabei unter senkrechtem Lichteinfall durchgeführt, während bei der zweiten Belichtung der Lichteinfall streifend erfolgt, wobei die Polarisationsrichtung des Lichtes gegenüber der ersten Belichtung um 90° gedreht werden muss. In Iimura, Y. et al. in J. Photopolym.Sci.Technol., Vol.8, No.2,259 (1995) wird demonstriert, dass bei einer Einfachbelichtung mit schrägem Lichteinfall kein Kippwinkel induziert wird. Die Orientierungsrichtung des Polyvinylcinnamat-Photopolymers, das dabei verwendet wurde, steht senkrecht zur Polarisationsrichtung des eingestrahlten UV-Lichtes. Bei der ersten Belichtung wird daher zunächst nur die Orientierungsrichtung festgelegt, eine Vorzugsrichtung für den Kippwinkel kann es aus Symmetriegründen nicht geben. Bei der zweiten Belichtung mit schrägem Lichteinfall und um 90° verdrehter Polarisationsrichtung wird nun eine Orientierung senkrecht zur schon erreichten Orientierung aufgebaut, was zwangsläufig die Orientierungsfähigkeit der ersten Richtung schwächt. Dabei wird gleichzeitig ein sehr kleiner Kippwinkel induziert. Bei der zweiten Belichtung muss daher ein Kompromiss eingegangen werden: Einerseits muss die zweite Belichtungszeit so lang sein, dass ein Kippwinkel entsteht, andererseits aber so kurz, dass die vorhandene Orientierung nicht vollständig zerstört wird. Notwendigerweise darf das PPN-Material nach Ende der ersten Belichtung noch nicht photostabil sein, um die zweite Belichtung durchführen zu können. Das verwendete, bekanntermassen nicht photostabile Polyvinylcinnamat ist deshalb und aufgrund der fehlenden thermischen Stabilität für den Einsatz in LCDs kaum brauchbar.

Bei den bisher bekannten PPN-Materialien und PPN-Orientierungsverfahren wird durch das Bestrahlen mit parallel zur Flächennormalen auftreffendem linear polarisiertem UV-Licht eine Orientierung senkrecht zu dessen Polarisationsrichtung induziert. PPN-Materialien mit dieser Eigenschaft werden im folgenden als senkrecht orientierend bezeichnet. Im Gegensatz dazu werden PPN-Materialien, die unter denselben Belichtungsbedingungen parallel zur Polarisationsrichtung des UV-Lichtes orientieren als parallel orientierend bezeichnet.

Der Erfindung liegt die Aufgabe zugrunde, ein einfaches Verfahren unter Verwendung geeigneter photostrukturierbarer Materialien bereitzustellen, bei denen während der Belichtung ein definierter, langzeitstabiler und genügend grosser Kippwinkel kombiniert mit einem beliebigen azimutalen Winkel vorgegeben werden kann.

Erfindungsgemäss wird dies durch ein Verfahren gemäß Anspruch 1 erreicht.

Zur Erzeugung eines Kippwinkels auf der Oberfläche eines PPN-Materials muss eine Asymmetrie bezüglich der PPN-Flächennormalen aufgebaut werden. Dies könnte z.B. während der Schichtpräparation geschehen, indem eine Vorzugsrichtung beim Aufbringen der Schicht vorgegeben wird. Dabei würde aber der Vorteil der Photostrukturierbarkeit der PPN-Schicht verloren gehen, da wiederum, wie beim Reiben, eine grossflächig einheitliche Richtung des Kippwinkels definiert würde. Um die Photostrukturierbarkeit zu gewährleisten, ist es deshalb am vorteilhaftesten, die Asymmetrie bei der Belichtung der Schicht einzuführen. Dies kann geschehen, indem die PPN-Schicht unter schrägem Lichteinfall belichtet wird. Bei den bisher bekannten PPN-Materialien liegt die Orientierungsrichtung allerdings jeweils senkrecht zum elektrischen Feldvektor des eingestrahlten polarisierten Lichtes. Aus Symmetriegründen geht daher die Richtungsinformation des schräg einfallenden Lichts für die Erzeugung eines Kippwinkels in der Orientierungsrichtung verloren. Aus diesem Grund kann bei diesen Systemen durch eine Einfachbelichtung kein Kippwinkel induziert werden.

Ueberraschenderweise ist es nun gelungen, in parallel orientierenden PPN-Materialien durch Schrägbelichtung einen Kippwinkel zu induzieren. Die Polarisationsrichtung des Lichtes bei der Bestrahlung der Schicht lag dabei in der durch die Flächennormale und der Richtung des einfallenden Lichtes beschriebenen Ebene. Da bei der schrägen Belichtung der elektrische Feldvektor des Lichtes schräg zur Oberfläche steht, findet auch die Photovernetzung bevorzugt schräg zur Oberfläche statt, was überraschenderweise zu einer bevorzugten Orientierungsrichtung an der Polymeroberfläche führt, die nicht in der Ebene der Oberfläche liegt. Die Grösse des Kippwinkels lässt sich durch verschiedene physikalische Parameter wie z.B. Einstrahlwinkel und Belichtungszeit steuern.

Eine Möglichkeit, auf PPN Material basierende Orientierungsschichten mit grossem Kippwinkel herzustellen, besteht darin, zunächst durch Schrägbelichtung einen Kippwinkel in einer PPN-Schicht zu induzieren und darauf anschliessend, wie in EP-A-611 981 beschrieben, eine Schicht aus vernetzbaren Flüssigkristallen aufzubringen. Orientierung und Kipprichtung werden von der PPN-Schicht auf die Flüssigkristalle übertragen und durch die anschliessende Vernetzung fixiert. Durch geeignete Wahl der vernetzbaren Flüssigkristallmoleküle lassen sich Mischungen entwickeln, die die Tendenz haben an der Grenzfläche zwischen Flüssigkristall und Luft senkrecht zur Oberfläche zu orientieren. Bei sehr dünnen Schichten ändert sich die Neigung der Flüssigkristalle jedoch über die Schichtdicke nicht, während bei dickeren Schichten die Neigung zur Oberfläche hin verstärkt wird. Dadurch ist es möglich, die durch die PPN-Schicht orientierte, verkippte und anschliessend vernetzte Flüssigkristallschicht (LCP) als Orientierungsschicht für Flüssigkristalle zu verwenden, wobei die Grösse des Kippwinkels an der LCP/Luft- Grenzschicht durch die Dicke der LCP-Schicht über einen weiten Bereich eingestellt werden kann.

Durch die Erzeugbarkeit eines Kippwinkels können die dafür geeigneten PPN-Materialien statt geriebenen Polymerschichten als Orientierungsschichten für Flüssigkristalle in verschiedenen Arten von Flüssigkristallanzeigen eingesetzt werden. Neben dem Vorteil der berührungsfreien Orientierung eröffnet vor allem die Strukturierbarkeit der PPN-Schichten völlig neue Möglichkeiten der Optimierung von Flüssigkristallanzeigen. So können nebeneinander liegende Gebiete von der Grösse von einigen mm mit unterschiedlicher azimutaler Orientierungsrichtung und definiertem Kippwinkel realisiert werden.

Erfindungsgemäss kann auch die Richtung des Kippwinkels von Gebiet zu Gebiet geändert werden. Durch Bestrahlung aus unterschiedlichen Richtungen lässt sich sogar die Grösse des Kippwinkels lokal variieren. So kann einerseits die Optik nebeneinander liegender Bildpunkte (Pixel) in LCDs durch Variation von Orientierung und Kippwinkel verändert werden, es kann aber auch die Optik eines einzelnen Pixels verändert werden, indem es in Subpixel mit voneinander verschiedener Orientierungs- und/oder Kippwinkelrichtung unterteilt wird. Durch die damit möglichen sogenannten Multidomain-LCDs lässt sich die Blickwinkelabhängigkeit wesentlich verbessern. Bei Multidomain TN-LCDs, die in Yang, K.H. in IDRC 91 DIGEST, 1991, 68 beschrieben sind und auf zweifachem Reiben einer Polyimidschicht basieren, wird die Polyimidschicht nach dem ersten Reiben mit Photolack beschichtet, photolithographisch ein Muster daraus freigelegt und danach in eine zweite Richtung gerieben. Im Gegensatz zu diesem aufwendigen und störanfälligen Verfahren ist die Photoorientierung von PPN-Schichten mit weniger und gleichzeitig berührungsfreien Bearbeitungsschritten verbunden, was eine wesentlich höhere Produktionsausbeute verspricht.

Ähnlich wie bei TN-LCDs lässt sich die Blickwinkelabhängigkeit auch bei STN-LCDs dadurch verbessern, dass jedes Pixel in zwei oder mehrere Subpixel unterteilt wird, wobei die azimutale Orientierungsrichtung auf beiden Orientierungsschichten von Subpixel zu Subpixel verschieden ist. Bei STN-LCDs, die einen höheren Kippwinkel erfordern als TN-LCDs, hat dieser einen noch viel stärkeren Einfluss auf die Funktion und das elektrooptische Verhalten als bei TN-LCDs. Das Mehrfachreiben von Polyimidschichten ist für Multidomain STN-LCDs kaum brauchbar, da es fast unmöglich ist, den beim ersten Reiben erzeugten Kippwinkel beim zweiten Reiben zu löschen und gleichzeitig einen genau gleich grossen Kippwinkel in einer anderen Richtung zu erzeugen.

PPN-Materialien eignen sich neben der einfacheren Handhabung als Orientierungsschichten für Multidomain STN-LCDs besonders gut, da durch die Strukturierung mit Hilfe von Photomasken jedes Subpixel nur einmal belichtet wird, wodurch der Kippwinkel in jedem Subpixel gleich gross ist.

Die für farbige STN-Flüssigkristallanzeigen notwendige Farbkompensation ist bei Multidomain STN-LCDs nicht mehr durch das herkömmliche Aufbringen von Retarderfolien auf die Aussenseiten der Glasplatten möglich, da die optische Achse des Retarders unter einem definiertem Winkel zur Orientierungsrichtung des Flüssigkristalls stehen muss. Die optische Achse des Retarders muss deshalb für jedes Subpixel entsprechend der jeweiligen Flüssigkristallorientierung eingestellt werden. Hierfür eignen sich statt dessen strukturierte Retarder, wie sie in RAN145 beschrieben sind, womit entsprechend RAN152 Schichtstrukturen bestehend aus Retarder und Orientierungsschicht aufgebaut werden können. Dabei wird in eine PPN-Schicht eine Orientierungsmuster eingeschrieben, dessen lokale Orientierung jeweils mit der gewünschten Richtung der optischen Achse übereinstimmt. Danach wird auf der PPN-Schicht eine LCP-Schicht mit der gewünschten optischen Verzögerung erzeugt, in der nun die optische Achse entsprechend dem Orientierungsmuster der darunterliegenden PPN-Schicht lokal variiert. Zur Vermeidung von Parallaxen muss sich die strukturierte Retarderschicht innerhalb des LCDs, zwischen Glasplatte und LC-Orientierungsschicht, befinden.

Ausser der Orientierung von Flüssigkristallen in LCDs sind definierte Kippwinkel sehr nützlich, um domänenfreie Schichten aus vernetzten Flüssigkristallen (LCP) herzustellen, wie sie in EP-A-611 981 oder in den noch unveröffentlichten Europäischen Patentanmeldungen NR. 95 108817.8 und 95 108866.5 beschrieben sind. Mit diesen Hybridschichten lassen sich optische Verzögerungsschichten, Polarisations-Interferenzfilter, Linear- und Zirkularpolarisatoren usw. herstellen. Durch Uebereinanderstapelung von Verzögerungsschichten mit gekippten optischen Achsen, lassen sich ferner optisch biaxiale Schichten verwirklichen. Azimutale Orientierung und Kippwinkel können dabei pixelweise für jede Schicht individuell eingestellt werden. Verzögerungsschichten, die optisch biaxial sind, bzw. deren optische Achse schräg zur Oberfläche steht, werden insbesondere zur weiteren Verbesserung der Blickwinkelabhängigkeit bei STN-Flüssigkristallanzeigen benötigt.

Sicherheitselemente auf der Basis von PPN-orientierten LCP-Schichten wie sie in den noch unveröffentlichten Europäischen Patentanmeldungen NR. 95 108817.8 und 95 108866.5 beschrieben sind, können durch Erzeugung eines definierten Kippwinkels noch um ein zusätzliches Merkmal verfeinert werden. Bei den aus obigen Anmeldungen bekannten Verfahren lassen sich Informationen in Form von Text, Mustern oder Bildern in PPN-LCP-Hybridschichten durch lokal unterschiedliche azimutale Orientierung einschreiben. Beim Auslesen mit einem bzw. zwei Polarisatoren nutzt man entweder die Doppelbrechung der LCP-Schicht oder die Anisotropie von in der LCP-Schicht orientierten dichroitischen Farbstoffen aus.

Falls nun erfindungsgemäss bei der Belichtung der PPN-Schicht auch noch ein definierter Kippwinkel vorgegeben wird, der von der LCP-Schicht übernommen und eventuell sogar noch verstärkt wird, so erhält man zusätzlich noch einen asymmetrischen Verkippungseffekt. Da die LCP-Moleküle gegenüber der Oberfläche geneigt sind, wird beim Kippen einer solchen Schicht um eine Achse, deren Projektion auf die Schichtebene nicht mit der Orientierungsrichtung der LCP-Moleküle (optische Achse) übereinstimmt, je nach Drehrichtung der Winkel zwischen optischer Achse und Blickrichtung verkleinert bzw. vergrössert. Da dabei bei doppelbrechenden Schichten die Doppelbrechung verkleinert bzw. vergrössert wird, führt dies bei Schichten mit optischen Verzögerungen bis etwa 300 nm zu einem asymmetrischen Hell/Dunkel- Effekt, während bei grösseren optischen Verzögerungen die beiden möglichen Drehrichtungen unterschiedliche Farben bewirken.

Bei dichroitischen Schichten hat das Verkippen der Schicht in die beiden unterschiedlichen Richtungen eine kleinere bzw. grössere Absorption zur Folge, was sich in einer asymmetrischen Änderung der Helligkeit auswirkt. Da man erfindungsgemäss die Richtung und Grösse des Kippwinkels lokal variieren kann, wird es damit sogar erstmals möglich, Information ohne Variation der azimutalen Orientierung, allein durch die Richtung und/oder Grösse des Kippwinkels zu codieren. Falls die Information nur über die Richtung des Kippwinkels codiert wurde, ist diese bei senkrechter Betrachtung nicht sichtbar, sie erscheint erst beim Verkippen der Schicht. Das Erscheinungsbild hängt auch in diesem Fall von der Richtung ab, in die die Schicht verkippt wird, denn beim Verkippen der Schicht in die entgegengesetzte Richtung vertauschen die Gebiete ihre unterschiedliche Helligkeit bzw. Farbe, d.h. das dargestellte Muster wird invertiert. Bei Verwendung von dichroitischen LCP-Schichten sind über Kippwinkel codierte Informationen sogar ohne Polarisator, allein durch Verkippen der Schicht sichtbar. Natürlich besteht auch die Möglichkeit, innerhalb einer Schicht sowohl die Richtungen der azimutalen Orientierung als auch des Kippwinkels lokal zu variieren. Dabei können sich Gebiete mit gleicher azimutaler Orientierung wiederum durch Richtung und Grösse des Kippwinkels unterscheiden. So können z.B. Schichten hergestellt werden, die bei senkrechter Betrachtung ein durch lokal unterschiedliche azimutale Orientierungen eingeschriebenes Muster erkennen lassen, beim Verkippen der Schicht jedoch ein zweites, dem ersten überlagertes Muster zeigen, das darüber hinaus durch Verkippen in die entgegengesetzte Richtung invertiert werden kann. Bei einer anderen Kombination von Azimut- und Kippwinkel könnte ein Muster beim Verkippen der Schicht in die eine Richtung unsichtbar werden, während der Kontrast des Musters beim Verkippen in die entgegengesetzte Richtung verstärkt wird. Auf diese Weise können komplexe, eindeutig verifizierbare Sicherheitselemente hergestellt werden, die extrem fälschungssicher sind.

Im folgenden werden unter Bezugnahme auf die beiliegende Zeichnung Ausführungsbeispiele der Erfindung beschrieben. Es zeigen
Fig. 1 eine schematische Darstellung der Belichtung einer PPN-Schicht
Fig. 2 eine schematische Darstellung einer LC-Schicht mit einem Kippwinkelmuster
Fig. 3 konoskopische Abbildungen einer Zelle mit erfindungsgemäss induziertem Kippwinkel ohne und mit Spannung an den Elektroden
Fig. 4 eine Transmissionskurve einer STN-Zelle mit erfindungsgemäss induziertem Kippwinkel

### Beispiel 1: Herstellung einer photostrukturierten PPN-Schicht

Um einen Kippwinkel durch Schrägbelichten zu induzieren, wird erfindungsgemäss ein parallel orientierendes PPN-Material benötigt. Als geeignete PPN-Materialien mit dieser Eigenschaft wurden in den nachfolgenden Beispielen folgende Photopolymere verwendet:

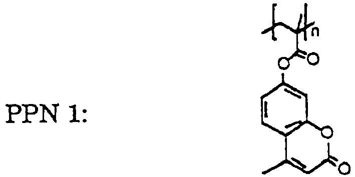

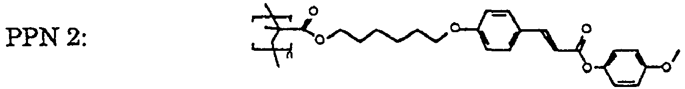

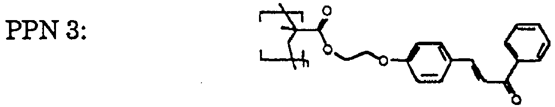

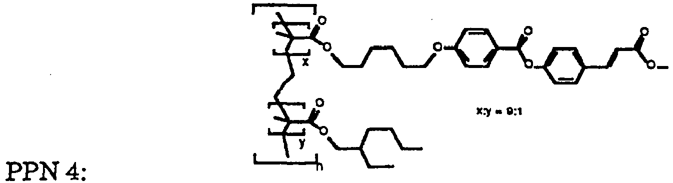

Das PPN-Material wurde jeweils zu 3% in NMP gelöst. Diese Lösung wurde dann verwendet, um durch Spincoating bei 2000 Upm eine PPN-Schicht auf einer Glasplatte aufzubringen. Die Schicht wurde danach 2 Stunden bei 130°C auf einer Wärmebank und weitere 4 Stunden bei 130°C in Vakuum getrocknet.

### Beispiel 2: Belichtung einer PPN-Schicht zur Erzeugung eines Kippwinkels

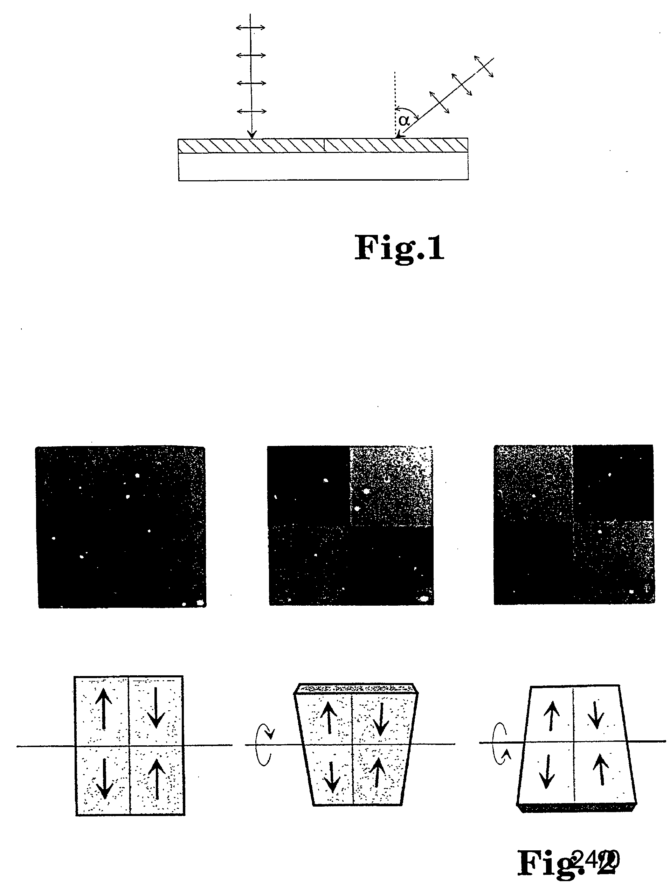

Aus dem Photopolymer PPN 1 wurde entsprechend Beispiel 1 auf einer Glasplatte 1 eine Schicht 2 präpariert. Anschliessend wurde, wie in Fig. 1 gezeigt, die linke Hälfte der Schicht eine Minute lang mit dem linear polarisierten Licht einer 200 W Hg-Höchstdrucklampe unter senkrechtem Einfall belichtet. Die rechte Hälfte war während dieser Belichtung abgedeckt. Danach wurde die PPN beschichtete Platte um 70° um eine Achse, die senkrecht auf der durch Einstrahlrichtung 3 und Polarisationsrichtung des Lichtes gebildeten Ebene stand gedreht und die rechte Hälfte der Schicht drei Minuten lang mit dem polarisierten UV-Licht bestrahlt. Die erhöhte Belichtungszeit bei der Schrägbelichtung berücksichtigte die durch das Verdrehen der Platte verringerte effektiv auftreffende Lampenintensität. Anschliessend wurde auf die belichtete PPN-Schicht eine etwa 1 mm dicke Schicht aus einem nematischen Flüssigkristall durch Spincoating aufgebracht. Betrachtete man die Platte dann unter gekreuzten Polarisatoren, so erkannte man, dass der Flüssigkristall über die gesamte Plattenfläche parallel zur Projektion der verwendeten UV-Polarisationsrichtung orientiert war. Bei Betrachtung im Polarisationsmikroskop waren jedoch in der linken Plattenhälfte sehr viele Domänen in der Grösse von einigen zehn mm zu erkennen. Die rechte Hälfte war dagegen frei von Domänen. Ordnete man die Platte mit der Orientierungsrichtung unter 45° zu den gekreuzten Polarisatoren an, so war sie aufgrund der Doppelbrechung einheitlich hell. Verkippte man die Platte dann um eine Achse senkrecht zur Orientierungsrichtung, so wurde etwa die Hälfte der Domänen der linken Plattenseite heller (grössere Doppelbrechung), die andere Hälfte jedoch dunkler (kleinere Doppelbrechung). Verkippte man die Platte in die entgegengesetzte Richtung, so wechselten die Domänen von hell nach dunkel und umgekehrt. Die asymmetrische Veränderung der Doppelbrechung beim Verkippen der Platte zeigte, dass die Flüssigkristallmoleküle gegenüber der Plattenoberfläche gekippt waren. Da beim Belichten der linken Plattenhälfte keine Richtung ausgezeichnet war, war auch keine Vorzugsverkippung der Flüssigkristallmoleküle zu erwarten, weshalb es Domänen gab, die sich durch unterschiedliche Kipprichtung unterschieden.

Beobachtete man die rechte Plattenhälfte, so wurde beim Verkippen in die eine Richtung die gesamte Fläche heller, beim Verkippen in die entgegengesetzte Richtung jedoch dunkler. Durch die Schrägbelichtung wurde hier also ein Kippwinkel im PPN-Material induziert, wodurch die Flüssigkristallmoleküle einheitlich in die so vorgegebene Richtung verkippt wurden.

### Beispiel 3: LC-Schicht mit Kippwinkelmuster

Aus dem Photopolymer PPN 2 wurde entsprechend Beispiel 1 eine Schicht präpariert. Auf die Schicht wurde eine Chrommaske montiert, die ein Schachbrettmuster mit Feldern von 3 mm Kantenlänge enthielt. Zusammen mit der Maske wurde die PPN-beschichtete Platte unter einem Winkel von +70° zur Einstrahlrichtung einer UV-Lampe angeordnet und durch die Maske hindurch bestrahlt. Wie in Beispiel 2 lag die Polarisationsrichtung in der durch das Lot auf die Platte und der UV-Einfallsrichtung gebildeten Ebene. Danach wurde die Maske entfernt und die PPN-Platte in die entgegengesetzte Richtung verdreht, sodass die Plattennormale und die UV-Einfallsrichtung einen Winkel von -70° bildeten. Die anschliessende zweite Belichtung konnte aufgrund der Photostabilität des PPN-Materials ohne Maske erfolgen.

Nach der Belichtung wurde eine vernetzbare nematische Flüssigkristallmischung in Anisol gelöst und durch Spincoating auf die PPN-Schicht aufgebracht. Die Mischung bestand im wesentlichen aus Molekülen mit stark polaren Cyano-Endgruppen, die die Tendenz haben, sich an der Grenzschicht zur Luft senkrecht zur Oberfläche zu stellen, wodurch ein vorhandener Kippwinkel verstärkt wird. Die Vernetzbarkeit wurde erreicht, indem der Mischung 5% folgender Diacrylatkomponente zugegeben wurde:

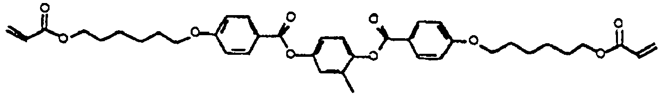

Zusätzlich enthielt die Mischung 2% des Photoinitiators IRGACURE 369 von Ciba. Anschliessend wurde die Flüssigkristallschicht vernetzt, indem sie für ca. 30 Minuten mit dem isotropen Licht einer 150 W Xenon-Lampe bestrahlt wurde.

Unter gekreuzten Polarisatoren war zu erkennen, dass die Flüssigkristallmoleküle über die gesamte Fläche einheitlich in eine Richtung orientiert waren. Ein Muster war bei senkrechter Betrachtung, wie in Fig. 2 links gezeigt, nicht zu erkennen. Ordnete man die Schicht mit der Orientierungsrichtung der Flüssigkristalle unter 45° zu den Polarisatoren an, so war sie maximal doppelbrechend. Verkippte man nun gemäss Fig. 2 Mitte die Platte um eine Achse senkrecht zur Orientierungsrichtung, so wurde das Schachbrettmuster mit hellen und dunklen Feldern deutlich erkennbar. Verkippte man die Platte gemäss Fig. 2 rechts in die entgegengesetzte Richtung, so erhielt man das komplementäre Schachbrettmuster, d.h. die hellen und dunklen Felder wurden vertauscht. Das Erscheinen des Musters trotz einheitlicher azimutaler Orientierung der Flüssigkristallmoleküle war auf die bei den beiden Schrägbelichtungen induzierten Kippwinkel mit unterschiedlicher Richtung zurückzuführen, die sich vom PPN-Material auf die Flüssigkristallschicht übertragen hatten. Beim Verkippen wurden diejenigen Felder dunkel, bei denen die Längsachse des Flüssigkristalls (optische Achse) zur Blickrichtung hin geneigt wurden. Dagegen wurden diejenigen Felder heller, deren optische Achse von der Blickrichtung weggedreht wurden, wodurch die Doppelbrechung erhöht wurde.

Um den induzierten Kippwinkel deutlich sichtbar zu machen, bestand die Flüssigkristallmischung in diesem Beispiel zum grossen Teil aus nicht vernetzbaren stark polaren Molekülen, sodass die mechanische Stabilität der vernetzten Schicht nicht sehr hoch war. Natürlich kann statt dessen auch eine Flüssigkristallmischung, die nur aus vernetzbaren Molekülen besteht, verwendet werden, wodurch ein dichtes Netzwerk (LCP) und dadurch eine hohe mechanische und thermische Stabilität erreicht wird. Solche Kippwinkelmuster mit asymmetrischer Blickwinkelabhängigkeit können z.B. als Sicherheitselement für Kreditkarten, Identitätskarten usw. verwendet werden.

### Beispiel 4: Zwei Domänen TN-LCD

Eine PPN 3 -beschichtete Glasplatte mit ITO-Elektroden wurde wie in Beispiel 3 mit einem Schachbrettmuster belichtet. Die Hälfte der Felder wurde dabei durch eine Chrommaske hindurch in einem ersten Belichtungsprozess unter einem Winkel von +70° schräg belichtet, während die restlichen Felder anschliessend unter einem Winkel von -70° belichtet wurden. Mit dieser Platte und einer zweiten ITO-Glasplatte mit einer geriebenen Polyimid-Orientierungsschicht wurde eine Zelle mit einem Plattenabstand von 10 mm gebaut. Die Reibrichtung der Polyimidschicht wurde dabei senkrecht zur Orientierungsrichtung der PPN-Platte angeordnet. Die Zelle wurde nun mit einer Flüssigkristallmischung bei einer Temperatur knapp oberhalb des Klärpunktes der Mischung gefüllt und danach langsam abgekühlt. Unter gekreuzten Polarisatoren erkannte man eine Drehzelle mit einer Verdrillung von 90°, mit von Feld zu Feld abwechselndem Drehsinn. Durch die unterschiedlich gewählte Einstrahlrichtung beim Belichten der PPN-Schicht wurde also ein Kippwinkel induziert, der für die abwechselnd links- bzw. rechtsdrehenden Gebiete verantwortlich war. In TN-LCDs lassen sich durch Unterteilung der Pixel in Subpixel, die sich wie in diesem Beispiel durch die Drehrichtung unterscheiden, sogenannte Two-Domain TN-LCDs verwirklichen, die sich gegenüber herkömmlichen TN-LCDs durch eine stark verbesserte Blickwinkelabhängigkeit auszeichnen.

Verwendet man auf beiden Seiten photostrukturierte Orientierungsschichten, lassen sich ebenso Four-Domain TN-LCDs realisieren, wodurch die Blickwinkelabhängigkeit noch mehr verbessert wird.

### Beispiel 5: Messung des Kippwinkels

Auf zwei mit transparenten ITO-Elektroden beschichteten Glasplatten wurden wie in Beispiel 1 Schichten aus PPN 4 aufgebracht. Beide Schichten wurden dann ganzflächig 32 Minuten lang mit schräg unter 20° zur Flächennormalen einfallendem linear polarisiertem UV-Licht bestrahlt. Die Polarisationsrichtung lag dabei in der durch das Lot auf die Platte und der UV-Einfallsrichtung gebildeten Ebene. Aus den beiden Platten wurde dann eine Parallelzelle mit einem Plattenabstand von 20 mm gebaut, die mit der nematischen Flüssigkristallmischung 7728 der Firma ROLIC AG bei einer Temperatur knapp oberhalb des Klärpunktes der Mischung gefüllt wurde. Nach dem langsamen Abkühlen der Zelle schaltete die Zelle beim Anlegen einer Spannung an die beiden Elektroden einheitlich. Reverse Tilt wurde nicht beobachtet. Der Kippwinkel, der beim Schrägbelichten induziert wurde, hatte sich also auf die Flüssigkristallmoleküle in der Zelle übertragen. Anschliessend wurde der Kippwinkel der Flüssigkristalle mit der Kristalldrehmethode optisch gemessen. Es ergab sich ein Kippwinkel von 11°.

### Beispiel 6: Einfluss des Einstrahlwinkels auf den Kippwinkel

Wie in Beispiel 5 wurden zwei Glasplatten mit PPN 4 beschichtet. Im Gegensatz zu Beispiel 5 wurden die Schichten nun mit unter 70° zur Flächennormalen einfallendem UV-Licht bestrahlt. Die effektive Bestrahlungszeit wurde gleich gewählt wie in Beispiel 5, sodass die tatsächliche Bestrahlungszeit, die um den Geometriefaktor korrigiert werden musste, 88 Minuten betrug. Die aus den beiden Platten gebaute Parallelzelle wurde wiederum mit der Flüssigkristallmischung 7728 von ROLIC AG gefüllt. Der Kippwinkel des Flüssigkristalls betrug in diesem Fall 1.4°.

### Beispiel 7: Änderung des Kippwinkels über die Belichtungszeit

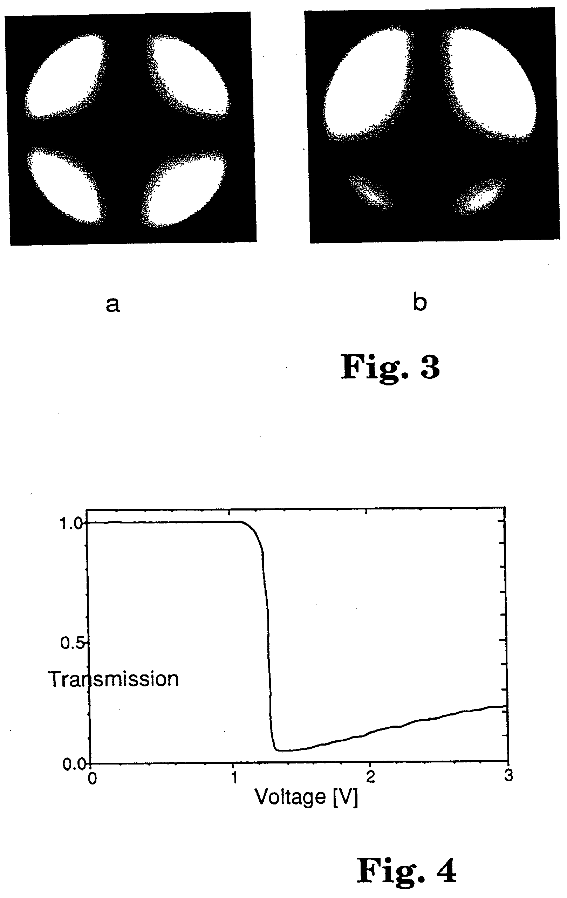

Wie in Beispiel 6 wurden zwei ITO-beschichtete Glasplatten mit PPN 4 beschichtet und unter 70° schrägbelichtet. Die Belichtungszeit betrug aber statt 88 Minuten nun nur 12 Minuten. Wie in den Beispielen 5 und 6 wurde nun aus den beiden Platten eine Parallelzelle gebaut und mit der Flüssigkristallmischung 7728 von ROLIC AG gefüllt. Zwischen gekreuzten Polarisatoren war zu erkennen, dass der Flüssigkristall nicht mehr planar orientiert war, vielmehr liess die konoskopische Abbildung (Abbildung 3a) erkennen, dass die Flüssigkristallmoleküle nahezu senkrecht auf der Orientierungsschicht standen. Dass sie jedoch leicht geneigt zur Flächennormalen standen, erkannte man am Unterschied zur tatsächlich senkrechten (homöotropen) Orientierung, die man nach Anlegen einer Spannung von 6 Volt an die beiden ITO-Elektroden erhielt, wodurch das konoskopische Kreuz in das Zentrum verschoben wurde (Abb. 3b). Die anschliessende Messung des Kippwinkels ergab, dass die Längsachse der Flüssigkristallmoleküle unter einem Winkel von 86° zur Plattenoberfläche standen.

Durch Variation von Einstrahlwinkel und Bestrahlungszeit ist der Kippwinkel damit zwischen 0° und nahezu 90° beliebig einstellbar.

### Beispiel 8: LPP-orientierte STN-Zelle

Zwei ITO-beschichtete Glasplatten wurden mit PPN 4 beschichtet und 60 Minuten lang unter 70° schrägbelichtet. Die beiden Platten wurden so zusammengebaut, dass eine linksdrehende 240° STN-Zelle entstand. Der Plattenabstand wurde durch Abstandshalter auf 7mm eingestellt. Die Mischung 7728 wurde mit 0.73% des linksdrehenden chiralen Dotierstoffes CM-9209F von ROLIC AG dotiert und in die Zelle gefüllt. Beim Ablegen einer Spannung wurden keine Fingerprint Texturen beobachtet. Aus der Transmissionskurve der Zelle (Abb.4) ergab sich eine Steilheit von V₉₀/V₁₀=1.06. Dies zeigt, dass die Zelle im STN-Mode arbeitet.

Durch Schrägbelichten von parallel orientierenden PPN-Materialien lassen sich also Orientierungsschichten mit einem für STN-Zellen ausreichenden Kippwinkel herstellen.

## Patentansprüche

1. Verfahren zur Erzeugung eines photoorientierten Polymernetzwerkes zur Orientierung von Flüssigkristallen mit einem Kippwinkel an dessen Oberfläche, wobei das Polymernetzwerkmaterial so mit linear polarisiertem Licht bestrahlt wird, dass die Einfallsrichtung des Lichtes nicht parallel zur Flächennormalen der photoorientierbaren Schicht ist und die Polarisationsrichtung des Lichtes in der durch die Flächennormale der zu belichtenden Schicht und der Einfallsrichtung des Lichtes beschriebenen Ebene liegt, **dadurch gekennzeichnet, dass** ein Polymernetzwerkmaterial verwendet wird, in dem beim Bestrahlen mit parallel zur Flächennormalen auftreffendem linear polarisiertem Licht eine Orientierung parallel zu dessen Polarisationsrichtung induziert wird.

2. Verfahren nach Anspruch 1, **dadurch gekennzeichnet, dass** der Kippwinkel durch eine Einfachbelichtung induziert wird.

3. Orientierungsschicht für Flüssigkristalle, welche ein photoorientiertes Polymernetzwerk enthält, das nach einem Verfahren gemäss einem der Ansprüche 1 oder 2 hergestellt ist.

4. Orientierungsschicht für Flüssigkristalle nach Anspruch 3, **dadurch gekennzeichnet, dass** mindestens zwei Gebiete mit unterschiedlichen Kippwinkeln existieren.

5. Orientierungsschicht für Flüssigkristalle nach Anspruch 3, **dadurch gekennzeichnet, dass** mindestens in einem Gebiet nach einem der Ansprüche 1-2 ein Kippwinkel induziert wurde, während in mindestens in einem weiteren Gebiet kein definierter Kippwinkel existiert.

6. Orientierungsschicht für Flüssigkristalle nach Anspruch 3, **dadurch gekennzeichnet, dass** mindestens zwei Gebiete mit unterschiedlichen Kippwinkeln existieren, die durch Bestrahlen aus voneinander verschiedenen Richtungen erzeugt wurden.

7. Orientierungsschicht für Flüssigkristalle nach Anspruch 3, **dadurch gekennzeichnet, dass** mindestens zwei Gebiete mit unterschiedlichen Kippwinkeln existieren, die dadurch erzeugt wurden, dass die Bestrahlungszeiten voneinander verschieden gewählt wurden.

8. Orientierungsschicht für Flüssigkristalle nach Anspruch 3, **dadurch gekennzeichnet, dass** die azimutale Richtung der Orientierung lokal variiert.

9. Orientierungsschicht für Flüssigkristalle nach Anspruch 3, **gekennzeichnet durch** eine Schicht aus vernetzten Flüssigkristallen, wobei die noch unvernetzten Flüssigkristallmonomere auf das photoorientierte Polymernetzwerk aufgebracht und vernetzt wurden.

10. Orientierungsschicht nach Anspruch 9, **dadurch gekennzeichnet, dass** der Kippwinkel an der Oberfläche der vernetzten Flüssigkristallschicht verschieden vom Kippwinkel der darunterliegenden photoorientierten Polymernetzwerkschicht ist.

11. Verwendung von Orientierungsschichten nach einem der Ansprüche 3 - 10 zur Orientierung von Flüssigkristallen in Flüssigkristallanzeigen.

12. Verwendung von Orientierungsschichten mit lokal unterschiedlich azimutaler Orientierung und/oder Kippwinkel nach einem der Ansprüche 3 - 10 zur Herstellung von Multidomain TN-LCDs mit verbesserter Blickwinkelabhängigkeit.

13. Verwendung von Orientierungsschichten mit lokal unterschiedlich azimutaler Orientierung und/oder Kippwinkel nach einem der Ansprüche 3 - 10 zur Herstellung von Multidomain STN-LCDs mit verbesserter Blickwinkelabhängigkeit.

14. Verwendung von Orientierungsschichten nach einem der Ansprüche 3 - 10 zur domänenfreien Orientierung von vernetzbaren Flüssigkristallmonomeren.

15. Hybridschicht, bestehend aus einer Orientierungsschicht nach einem der Ansprüche 3 - 10 und einer durch diese orientierten vernetzten Flüssigkristallschicht, **dadurch gekennzeichnet, dass** die Richtung der Neigung der optischen Achse in der vernetzten Flüssigkristallschicht durch die Richtung des Kippwinkels der photoorientierten Polymernetzwerk-Orientierungsschicht vorgegeben ist.

16. Hybridschicht nach Anspruch 15, **dadurch gekennzeichnet, dass** die dichroitische Farbstoffe enthält.

17. Hybridschicht, **dadurch gekennzeichnet, dass** mindestens zwei Hybridschichten nach einem der Ansprüche 15 oder 16, oder mindestens eine solche Hybridschicht und eine Orientierungsschicht nach einem der Ansprüche 3 - 10 übereinander angeordnet sind.

18. Optisch biaxiale Schichtstruktur, bestehend aus einer Hybridschicht nach Anspruch 17, **dadurch gekennzeichnet, dass** mindestens ein Gebiet existiert, in dem sich die azimutale Orientierung oder der Kippwinkel der optischen Achse mindestens zweier übereinanderliegender Schichten unterscheiden.

19. Optisches Bauelement, bestehend aus einer Schichtstruktur nach einem der Ansprüche 15-18, **dadurch gekennzeichnet, dass** mindestens zwei Gebiete existieren, die sich durch die Richtung des Kippwinkels unterscheiden, deren azimutale Orientierungsrichtung jedoch gleich ist.

20. Verwendung von Schichtstrukturen nach einem der Ansprüche 15 - 18 als optische Verzögerungsschichten.

21. Verwendung von Hybridschichten nach Anspruch 16 zur Herstellung von strukturierten oder unstrukturierten Linearpolarisatoren.

22. Verwendung von Schichtstrukturen nach einem der Ansprüche 15 - 18 zur Herstellung von Polarisationsinterferenzfiltern.

23. Verwendung einer Schichtstruktur nach einem der Ansprüche 15 - 18 zur Fälschungs- und Kopiersicherung, in Identitätskarten oder in Kreditkarten.

## Claims

1. Method of creating a photo-oriented polymer network for orientation of liquid crystals having a tilt angle at the surface thereof, the polymer network material being irradiated with linearly polarised light so that the direction of incidence of the light is not parallel to the surface-normal of the photo-orientable layer and the polarisation direction of the light lies in the plane described by the surface-normal of the layer being exposed to light and the direction of incidence of the light, **characterised in that** a polymer network material is used in which, on irradiation with linearly polarised light incident parallel to the surface-normal, an orientation parallel to the polarisation direction thereof is induced.

2. Method according to claim 1, **characterised in that** the tilt angle is induced by a single exposure to light.

3. Orientation layer for liquid crystals, which orientation layer contains a photo-oriented polymer network produced in accordance with a method according to either one of claims 1 and 2.

4. Orientation layer for liquid crystals according to claim 3, **characterised in that** there are at least two areas having different tilt angles.

5. Orientation layer for liquid crystals according to claim 3, **characterised in that** a tilt angle has been induced in at least one area in accordance with either one of claims 1 and 2, while in at least one further area there is no defined tilt angle.

6. Orientation layer for liquid crystals according to claim 3, **characterised in that** there are at least two areas having different tilt angles which have been created by irradiation from mutually different directions.

7. Orientation layer for liquid crystals according to claim 3, **characterised in that** there are at least two areas having different tilt angles which have been created by selection of irradiation times that are different from one another.

8. Orientation layer for liquid crystals according to claim 3, **characterised in that** the azimuthal direction of the orientation varies locally.

9. Orientation layer for liquid crystals according to claim 3, **characterised by** a layer of crosslinked liquid crystals, the uncrosslinked liquid crystal monomers having been applied to the photo-oriented polymer network and crosslinked.

10. Orientation layer according to claim 9, **characterised in that** the tilt angle at the surface of the crosslinked liquid crystal layer is different from the tilt angle of the underlying photo-oriented polymer network layer.

11. Use of orientation layers according to any one of claims 3 to 10 for orientation of liquid crystals in liquid crystal displays.

12. Use of orientation layers having a locally different azimuthal orientation and/or tilt angle according to any one of claims 3 to 10 in the production of multidomain TN LCDs having improved viewing angle dependency.

13. Use of orientation layers having a locally different azimuthal orientation and/or tilt angle according to any one of claims 3 to 10 in the production of multidomain STN LCDs having improved viewing angle dependency.

14. Use of orientation layers according to any one of claims 3 to 10 for domain-free orientation of crosslinkable liquid crystal monomers.

15. Hybrid layer, consisting of an orientation layer according to any one of claims 3 to 10 and a crosslinked liquid crystal layer oriented thereby, **characterised in that** the direction of the inclination of the optical axis in the crosslinked liquid crystal layer is specified by the direction of the tilt angle of the photo-oriented polymer network orientation layer.

16. Hybrid layer according to claim 15, **characterised in that** it contains dichroic dyes.

17. Hybrid layer, **characterised in that** at least two hybrid layers according to either one of claims 15 and 16, or at least one such hybrid layer and an orientation layer according to any one of claims 3 to 10, are arranged one above the other.

18. Optically biaxial layer structure, consisting of a hybrid layer according to claim 17, **characterised in that** there is at least one area in which the azimuthal orientation or the tilt angle of the optical axis of at least two layers located one above the other are different.

19. Optical structural element, consisting of a layer structure according to any one of claims 15 to 18, **characterised in that** there are at least two areas which differ by the direction of the tilt angle, but the azimuthal orientation direction of which is the same.

20. Use of layer structures according to any one of claims 15 to 18 as optical retarder layers.

21. Use of hybrid layers according to claim 16 in the production of structured or unstructured linear polarisers.

22. Use of layer structures according to any one of claims 15 to 18 in the production of polarisation interference filters.

23. Use of a layer structure according to any one of claims 15 to 18 in counterfeit and copying protection, in identity cards or in credit cards.

## Revendications

1. Procédé de production d'un réseau polymère photo-orienté, pour orienter des cristaux liquides selon un angle d'inclinaison par rapport à sa surface, dans lequel le matériau du réseau polymère est irradié par une lumière polarisée linéairement de telle sorte que la direction d'incidence de la lumière ne soit pas parallèle à la normale à la surface de la couche photo-orientable, et que la direction de la polarisation de la lumière se trouve dans le plan défini par la normale à la surface de la couche à éclairer et de la direction d'incidence de la lumière, **caractérisé en ce qu'**on utilise un matériau de réseau polymère dans lequel, lors d'une irradiation avec une lumière polarisée linéairement tombant parallèlement à la normale à la surface, une orientation est induite parallèlement à sa direction de polarisation.

2. Procédé selon la revendication 1, **caractérisé en ce que** l'angle d'inclinaison est induit par un éclairage simple.

3. Couche d'orientation pour cristaux liquides, qui contient un réseau polymère photo-orienté qui est fabriqué par un procédé selon l'une des revendications 1 ou 2.

4. Couche d'orientation pour cristaux liquides selon la revendication 3, **caractérisée en ce qu'**existent au moins deux zones ayant des angles d'inclinaison différents.

5. Couche d'orientation pour cristaux liquides selon la revendication 3, **caractérisée en ce qu'**un angle d'inclinaison a été induit dans au moins une zone selon l'une des revendications 1 à 2, tandis qu'aucun angle d'inclinaison défini n'existe dans au moins une autre zone.

6. Couche d'orientation pour cristaux liquides selon la revendication 3, **caractérisée en ce qu'**existent au moins deux zones ayant des angles d'inclinaison différents, qui ont été produites par irradiation à partir de directions différentes l'une de l'autre.

7. Couche d'orientation pour cristaux liquides selon la revendication 3, **caractérisée en ce qu'**existent au moins deux zones ayant des angles d'inclinaison différents, qui ont été produites par le fait que les temps d'irradiation ont été choisis différents l'un de l'autre.

8. Couche d'orientation pour cristaux liquides selon la revendication 3, **caractérisée en ce que** la direction azimutale de l'orientation varie localement.

9. Couche d'orientation pour cristaux liquides selon la revendication 3, **caractérisée par** une couche de cristaux liquides réticulés, les monomères cristallins liquides non encore réticulés ayant été appliqués et réticulés sur le réseau ponté photo-orienté.

10. Couche d'orientation pour cristaux liquides selon la revendication 9, **caractérisée en ce que** l'angle d'inclinaison sur la surface de la couche de cristaux liquides réticulés est différent de l'angle d'inclinaison de la couche de réseau polymère photo-orienté disposée en-dessous.

11. Utilisation des couches d'orientation selon l'une des revendications 3 à 10 pour orienter des cristaux liquides dans des affichages à cristaux liquides.

12. Utilisation des couches d'orientation ayant des orientations azimutales et/ou des angles d'inclinaison localement différents selon l'une des revendications 3 à 10 pour fabriquer des affichages à cristaux liquides nématiques torsadés TN-LCD multidomaines présentant une dépendance améliorée vis-à-vis de l'angle d'observation.

13. Utilisation des couches d'orientation ayant des orientations azimutales et/ou des angles d'inclinaison localement différents selon l'une des revendications 3 à 10 pour fabriquer des affichages à cristaux liquides nématiques super-torsadés (STN-LCD) multidomaines ayant une dépendance améliorée vis-à-vis de l'angle d'inclinaison.

14. Utilisation des couches d'orientation selon l'une des revendications 3 à 10 pour une orientation sans domaine des monomères cristallins liquides réticulables.

15. Couche hybride constituée d'une couche d'orientation selon l'une des revendications 3 à 10 et d'une couche de cristaux liquides réticulés orientée par cette dernière, **caractérisée en ce que** la direction de l'inclinaison de l'axe optique dans la couche de cristaux liquides réticulés est prédéfinie par la direction de l'angle d'inclinaison de la couche d'orientation du réseau polymère photo-orienté.

16. Couche hybride selon la revendication 15, **caractérisée en ce qu'**elle contient des colorants dichroïques.

17. Couche hybride, **caractérisée en ce qu'**au moins deux couches hybrides selon l'une des revendications 15 ou 16, ou au moins une couche hybride de ce type et une couche d'orientation selon l'une des revendications 3 à 10, sont disposées l'une au-dessus de l'autre.

18. Structure de couches optiquement biaxiale, constituée d'une couche hybride selon la revendication 17, **caractérisée en ce qu'**existe au moins une zone dans laquelle l'orientation azimutale ou l'angle d'inclinaison de l'axe optique d'au moins deux couches disposées l'une au-dessus de l'autre diffèrent.

19. Composant optique, constitué d'une structure de couches selon l'une des revendications 15 à 18, **caractérisé en ce qu'**existent au moins deux zones qui se distinguent par la direction de l'angle d'inclinaison, mais dont la direction de l'orientation azimutale est la même.

20. Utilisation de structures de couches selon l'une des revendications 15 à 18 en tant que couches de retard optique.

21. Utilisation des couches hybrides selon la revendication 16 pour fabriquer des polariseurs linéaires structurés ou non structurés.

22. Utilisation des structures de couches selon l'une des revendications 15 à 18 pour fabriquer des filtres interférentiels polarisants.

23. Utilisation d'une structure de couches selon l'une des revendications 15 à 18 pour la protection contre les falsifications et la copie, dans des cartes d'identité ou dans des cartes de crédit.
